# FASCICULE DE BREVET EUROPEEN

(11) **EP 1 834 875 B1**
(45) Date de publication et mention de la délivrance du brevet: **08.07.2009**
(21) Numéro de dépôt: 07290261.2
(22) Date de dépôt: 02.03.2007
(51) Int. Cl.: B64C 25/42

(54) **Procédé de gestion du freinage d'un aéronef par prévision de son déplacement sur la plateforme aéroportuaire**
Verfahren zur Steuerung der Bremsung eines Luftschiffs mittels Vorhersage von dessen Bewegung auf der Flughafenplattform
Method of managing the braking of an aircraft by predicting its movement on the airport platform

(30) Priorité: 13.03.2006 FR 0602182
(43) Date de publication de la demande: 19.09.2007
(73) Titulaire: MESSIER-BUGATTI, 78140 Vélizy Villacoublay (FR)
(72) Inventeur: Dellac, Stéphane, 31170 Tournefeuille (FR); Jacquet, Arnaud, 92140 Clamart (FR); Esteban, Antoine, 94250 Gentilly (FR)
(74) Mandataire: Parzy, Benjamin Alain

(56) Documents cités:
- EP-A- 1 496 413
- EP-A2- 0 895 929
- US-A- 5 047 942
- US-A1- 2004 230 353
- US-A1- 2005 171 654

## Description

L'invention concerne un procédé de gestion du freinage d'un aéronef par prévision de son déplacement sur la plateforme aéroportuaire.

### ARRIERE-PLAN DE L'INVENTION

En général, le freinage d'un aéronef est effectué en réponse à une demande de freinage du pilote, soit par un appui de celui-ci sur les pédales de freins, soit par la sélection d'un mode de freinage automatique (fonction dite "autobrake").

Depuis peu apparaissent des moyens pour suivre précisément le trajet de l'aéronef sur une plateforme aéroportuaire voir, par exemple, le document US 20040230353. Ces moyens sont notamment utilisés pour prévenir des risques de collision, par exemple entre un aéronef et un autre aéronef ou tout autre obstacle fixe ou mobile.

Le suivi des trajets permet de connaître précisément les déplacements des aéronefs sur la plateforme aéroportuaire, et notamment le mouvement des aéronefs (position, vitesse, accélération fonctions du temps) le long des trajets.

### OBJET DE L'INVENTION

L'invention vise à exploiter les possibilités nouvelles de suivi de trajectoire sur la plateforme aéroportuaire pour améliorer la gestion du freinage de l'aéronef.

### BREVE DESCRIPTION DE L'INVENTION

En vue de la réalisation de ce but, on propose un procédé de gestion du freinage d'un aéronef lors de ses déplacements sur une plateforme aéroportuaire, comportant l'étape de, à partir de caractéristiques d'un mouvement de l'aéronef le long d'un trajet donné à suivre par l'aéronef sur la plateforme aéroportuaire, déduire des informations de freinage à effectuer de sorte que l'aéronef se déplace effectivement selon ledit mouvement le long du dit trajet.

Ainsi, en prévoyant le trajet à venir de l'aéronef et le mouvement de l'aéronef le long de ce trajet, on en déduit des caractéristiques inertielles du mouvement (position, vitesse, accélération) qui permettent de déterminer des informations concernant les freinages à venir, et donc de prévoir la façon dont ces freinages seront effectués.

La détermination des informations concernant les freinages selon l'invention ouvre de nouvelles possibilités.

Les informations concernant les freinages permettent par exemple de prévoir, à l'aide d'un modèle thermique quelle sera l'évolution de la température des éléments de friction, ce qui permet de mieux caler les modèles numériques de comportement des freins, ou encore de prévoir les durées nécessaires pour permettre aux freins de refroidir lorsque l'aéronef est arrêté à l'aérogare ou au seuil de piste.

Cette prévision permet encore de comparer divers trajets possibles entre eux du point de vue de l'utilisation des freins et permet par exemple de sélectionner le trajet qui sollicitera le moins les freins, ou encore d'optimiser l'application des freinages le long d'un trajet donné. Cette prévision permet encore de comparer entre eux divers mouvements pour un même trajet sur des critères basés sur l'utilisation des freins.

### BREVE DESCRIPTION DES DESSINS

L'invention sera mieux comprise à la lumière de la description qui suit en référence aux figures des dessins annexés parmi lesquelles :
- la figure 1 est une vue simplifiée d'une plateforme aéroportuaire illustrant deux trajets possibles d'un aéronef sur ladite plateforme aéroportuaire ;
- la figure 2 est un graphe en fonction du temps illustrant les freinages et la température moyenne des freins de l'aéronef si l'aéronef suit le premier trajet;
- la figure 3 est un graphe similaire au graphe de la figure 2 pour le second trajet;
- la figure 4 est un graphe similaire au graphe de la figure 2 pour une variante de mouvement le long du second trajet

### DESCRIPTION DETAILLEE DE L'INVENTION

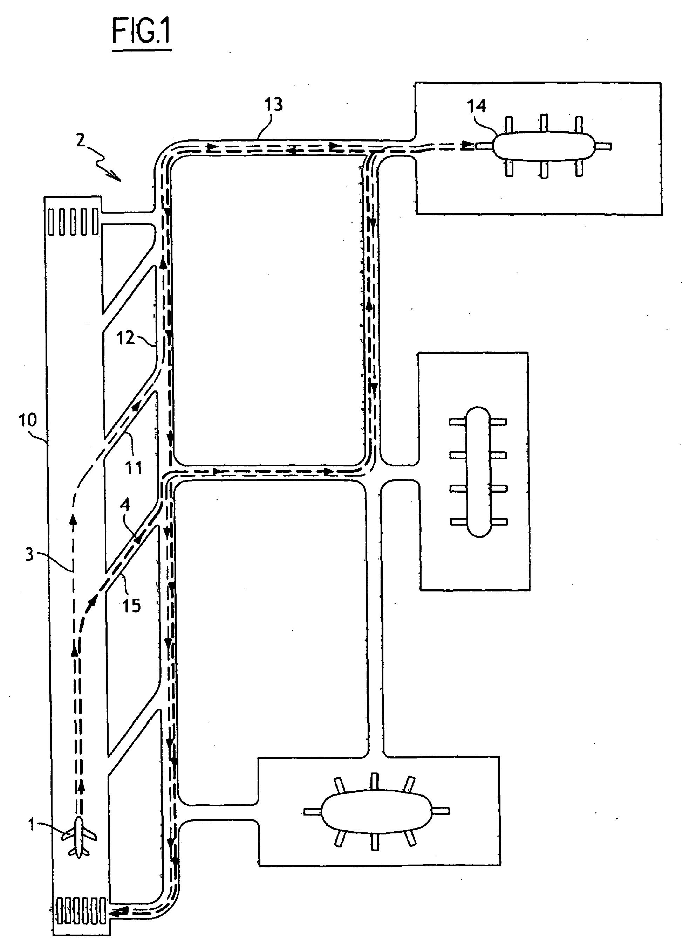

En référence à la figure 1, un aéronef 1 se posant sur une plateforme aéroportuaire 2 est susceptible de se déplacer sur ladite plateforme aéroportuaire selon plusieurs trajets.

Sur la figure sont tracés un premier trajet 3 en traits pointillés fins partant du seuil de piste et finissant au terminal vers lequel le contrôle de la plateforme aéroportuaire prévoit d'envoyer l'aéronef.

Le calculateur de freinage de l'aéronef 1 est programmé pour, à partir de la connaissance de ce trajet, qui est par exemple proposé par la tour de contrôle de la plateforme aéroportuaire, estimer un mouvement de l'aéronef le long de ce trajet, c'est-à-dire l'évolution dans le temps de la position et de la vitesse de l'aéronef nécessaires pour suivre le trajet. Le mouvement est établi en respectant divers critères comme une vitesse de manoeuvre maximale sur la plateforme aéroportuaire, des points d'arrêt obligatoires, ou encore un temps maximal de rotation entre l'instant d'atterrissage et l'instant d'arrivée au terminal, et de divers paramètres propres à l'appareil tels que la masse de l'aéronef, la vitesse d'atterrissage...

Ainsi, par exemple, selon le premier trajet 3 illustré ici, le mouvement estimé se compose comme suit. L'aéronef 1 se trouve d'abord sur la piste d'atterrissage 10 sur laquelle un freinage d'intensité moyenne et de longue durée est effectué de façon à faire baisser la vitesse de l'aéronef d'une vitesse d'atterrissage jusqu'à une vitesse de manoeuvre au sol. Puis l'aéronef 1 sort de la piste par la bretelle oblique 11.

Puis l'aéronef rejoint le taxiway 12 parallèle à la piste 10. Au bout du taxiway 12, le pilote freine l'aéronef 1 et effectue un virage lent à droite à 90 degrés au moyen de la commande d'orientation de l'aéronef. L'aéronef se dirige enfin au pas vers le terminal 14 à proximité duquel le pilote immobilise l'aéronef.

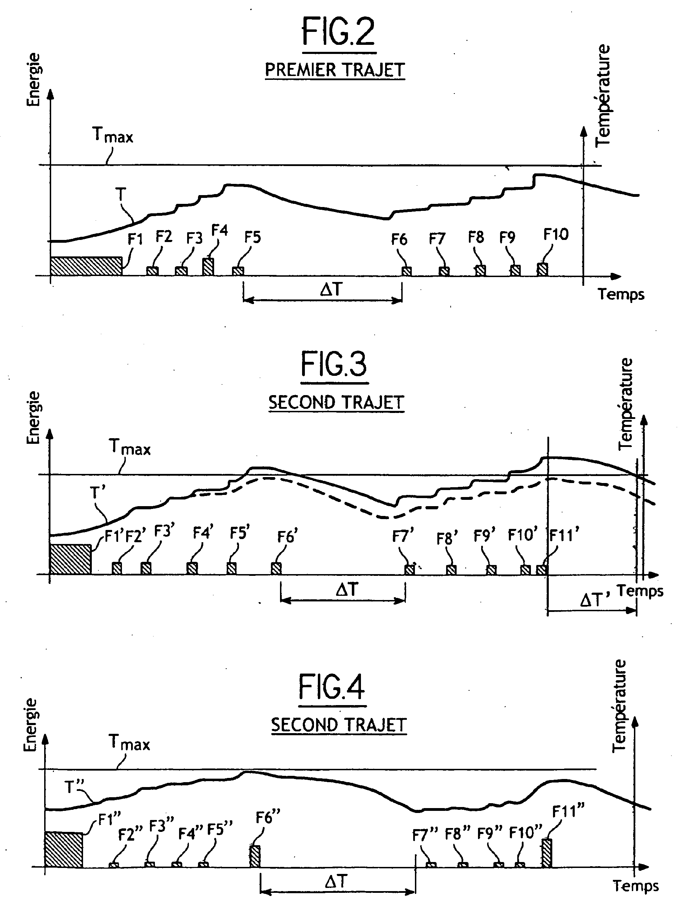

On voit sur la figure 2 la séquence des freinages F1 à F5 correspondant au mouvement ainsi déterminé le long de cette première partie du trajet 3, la séquence étant représentée par des rectangles sur l'axe du temps. La hauteur des rectangles correspond à l'intensité de chacun des freinages, tandis que la longueur des rectangles correspond à la durée des freinages. L'énergie dissipée par chacun des freinages correspond à l'aire de chacun des rectangles, l'énergie totale dissipée étant égale à la somme des aires de tous les rectangles.

Puis, après un certain temps d'escale ΔT pendant lequel les freins refroidissent, l'aéronef se remet en mouvement selon la seconde partie du premier trajet 3 qui lui permet de rejoindre le seuil de piste. Comme explicité précédemment, l'aéronef 1 doit effectuer un certain nombre de freinages pour respecter les positions et vitesses du mouvement le long de cette seconde partie de trajet.

On voit sur la figure 2 la séquence des freinages F6 à F10 correspondant à la seconde partie du trajet 3.

L'estimation de la séquence de freinages sur la totalité du trajet 3, inclut ici la détermination des données suivantes:
- le nombre de freinages à effectuer;
- les durées des freinages;
- l'énergie à dissiper pour chacun des freinages;
- l'espacement entre deux freinages consécutifs.

De préférence, cette estimation prend en compte la topologie de la plateforme aéroportuaire, et notamment les montées et descentes, mais également toutes les contraintes de circulation de l'aéronef sur la plateforme aéroportuaire, comme les temps, les arrêts ou les vitesses imposées.

Selon un mode particulier d'exploitation de ces données, on estime la température qui serait atteinte par chacun des freins si l'aéronef suit effectivement le premier trajet 3 selon le mouvement retenu.

L'évolution de la température est obtenue par la mise en oeuvre d'un modèle thermique implanté dans le calculateur de freinage de l'aéronef qui prend en compte les divers freinages estimés précédemment. Chacun des freinages donne lieu à une dissipation d'énergie qui contribue à échauffer les éléments de friction des freins. La température des freins est donc susceptible d'évoluer en raison de cet échauffement, mais également d'un refroidissement naturel par convection.

Le modèle thermique permet de prédire l'évolution de la température de chacun des freins, compte tenu notamment de l'état d'usure des éléments de friction de chacun des freins, et donc de l'épaisseur desdits éléments de friction.

Dans le cas du premier trajet 3, les freinages illustrés à la figure 2 sous la forme de rectangles permettent de tracer l'évolution prévisible de la température des freins (seule la température T de l'un des freins a été illustrée ici pour plus de clarté). Dans cet exemple, on constate que la température T du frein concerné reste en dessous d'une température limite Tmax.

La température Tmax est par exemple une température limite au delà de laquelle l'aéronef n'est pas autorisé à décoller. Ici, la température Tmax n'étant pas atteinte, l'aéronef peut immédiatement décoller après son arrivée sur le seuil de piste.

Ainsi, on vérifie à l'avance grâce au procédé de l'invention que le temps de rotation de l'aéronef sur la plateforme aéroportuaire ne sera pas rallongé par des contraintes de refroidissement des freins si l'aéronef suit le premier trajet 3.

La température Tmax peut également représenter un seuil T1 au delà duquel les éléments de friction subissent une usure rapide, de sorte qu'il est préférable, pour préserver les éléments de friction, d'éviter d'atteindre la température limite Tmax.

Ainsi, on vérifie à l'avance grâce au procédé de l'invention que les éléments de friction seront restés dans des températures ne générant qu'une usure modérée, ce qui contribue à augmenter la durée de vie des éléments de friction.

Selon maintenant un second trajet 4 illustré à la figure 1 qui part du même seuil de piste que le premier trajet 3 et qui finit au même terminal, le calculateur de freinage de l'aéronef estime un mouvement de l'aéronef et en déduit la séquence de freinages illustrée à la figure 3. Selon le second trajet 4, l'aéronef freine plus intensément sur la piste 10 que dans le cas du premier trajet 3, ce qui lui permet de sortir plus rapidement de la piste par une bretelle oblique 15 en amont de la bretelle oblique 11.

Une fois la séquence des freinages F1'...F11' déterminée, le calculateur de freinage en déduit l'évolution des températures des freins (une seule température T' est ici tracée). On constate que cette fois, la température T' du frein concerné dépasse la température Tmax à deux reprises.

Le second dépassement impose à l'appareil un délai d'attente ΔT' suffisant pour que la température du frein concerné retombe en dessous de la température limite, avant que l'aéronef ne soit autorisé à décoller, ce qui augmente le temps de rotation de l'aéronef sur la plateforme aéroportuaire.

Quant au premier dépassement, s'il ne génère pas en soi un délai d'attente, il fait fonctionner les éléments de friction des freins dans une plage de températures dans laquelle ils sont susceptibles de s'user rapidement, ce qui n'est pas souhaitable.

Si le choix lui est donné, le pilote peut dès lors choisir le premier trajet 3 plutôt que le second trajet 4, ce qui lui permet tout à la fois d'assurer un temps de rotation minimal sur la plateforme aéroportuaire et de préserver les éléments de friction de ses freins.

Selon un aspect particulier de l'invention, le modèle thermique utilisé par le calculateur de freinage est de préférence conçu de façon à, dans le cas de trajets comme le second trajet 4 où un dépassement probable de la température limite Tmax est détecté, simuler l'effet d'un refroidissement forcé des freins. Le refroidissement forcé est obtenu par activation des ventilateurs de refroidissement qui équipent de façon connue en soi les freins de l'aéronef, l'activation étant commandée par le pilote ou directement par le calculateur de freinage.

L'effet du refroidissement forcé sur la température de freins est illustré à la figure 3 par la courbe en traits épais pointillés. On constate que le refroidissement forcé permet ici de faire revenir la courbe de température en dessous de la température limite Tmax, de sorte que le pilote se voit maintenant offrir la possibilité de suivre le second trajet 4 sans souffrir d'une usure importante des éléments de friction de ses freins ou d'un délai d'attente imposé.

Selon un autre aspect particulier de l'invention, le calculateur de freinage est programmé pour, dans le cas de trajets comme le second trajet 4 où un dépassement probable de la température limite Tmax est détecté, générer un nouveau mouvement le long du trajet considéré, induisant une nouvelle séquence de freinages. Comme cela est illustré à la figure 4, le nouveau mouvement conserve le freinage initial permettant à l'aéronef de sortir rapidement de la piste 10, mais autorise une vitesse de manoeuvre plus importante de l'aéronef, de sorte que les freinages intermédiaires sont moins forts. Seul le freinage final avant l'arrêt (soit au terminal, soit au seuil de piste) est un peu plus fort. On constate que cette nouvelle répartition des freinages permet de maintenir la température T" des freins sous la température limite Tmax.

Selon encore un autre aspect de l'invention, le calculateur de freinage est programmé pour, dans le cas de trajets comme le second trajet 4 où un dépassement probable de la température limite Tmax est détecté, simuler plusieurs répartitions du freinage entre les freins de l'aéronef et retenir celle qui permettra aux températures de tous les freins de rester sous la température maximale Tmax, tout en respectant bien sûr le mouvement retenu le long du trajet.

Ainsi, grâce à la prévision des freinages selon l'invention, le calculateur de freinage peut mettre en oeuvre plusieurs stratégies pour sélectionner un trajet, ou, pour un trajet donné, sélectionner un mouvement particulier le long de ce trajet, la sélection lui permettant soit d'éviter d'atteindre des températures provoquant une usure rapide des éléments de friction des freins, soit d'éviter un délai d'attente en seuil de piste avant décollage.

Concernant les trajets, ceux-ci peuvent être déterminés par avance et intégrés dans une base de données. La détermination des trajets se fait soit en dénombrant tous les trajets possibles d'un point à un autre de la plateforme aéroportuaire, soit établis statistiquement à l'aide d'enregistrements des déplacements des aéronefs sur la plateforme aéroportuaire, les enregistrements étant obtenus grâce aux moyens de suivi évoqués en introduction.

Dans ce cas, le mouvement le long de chacun des trajets peuvent également être prédéterminés, par exemple de façon statistique, de sorte que la prévision des freinages et de l'évolution des températures des éléments de friction est facilement opérée en connaissant la masse de l'aéronef et l'état d'usure des freins.

Les trajets peuvent encore être établis en temps réel en fonction du trafic sur la plateforme aéroportuaire. Le calculateur de freinage est alors adapté à remettre à jour les prévisions de freinage en fonction des modifications du trajet ou du mouvement le long du trajet. Le contrôle de la plateforme aéroportuaire peut par exemple imposer un arrêt non prévu, ce qui impose un freinage supplémentaire à prendre en compte.

L'invention n'est pas limitée à ce qui vient d'être décrit, mais bien au contraire englobe toute variante entrant dans le cadre défini par les revendications.

En particulier, bien que l'on ait indiqué que le procédé de l'invention est mis en oeuvre par le calculateur de freinage de l'aéronef, le procédé de l'invention pourra être mis en oeuvre sur un calculateur de contrôle du trafic aéroportuaire disposé par exemple dans la tour de contrôle de la plateforme aéroportuaire. Le procédé de l'invention peut alors être mis en oeuvre simultanément pour tous les aéronefs présents sur la plateforme aéroportuaire, ce qui permet d'opérer une optimisation des conditions de freinage simultanément pour tous les aéronefs présents sur la plateforme aéroportuaire. En variante, les trajets et les mouvements le long de ces trajets peuvent être déterminés par le calculateur de contrôle du trafic aéroportuaire, tandis que le calculateur de freinage de l'aéronef procède uniquement à la prévision des freinages, le trajet et le mouvement étant imposé par le calculateur de contrôle du trafic. Dans ce cas, le calculateur de freinage est avantageusement adapté pour répartir les efforts de freinage sur les divers freins de l'aéronef pour faire en sorte que les températures des éléments de friction des freins restent le plus longtemps possible en dehors d'une plage de température dans laquelle les éléments de friction s'usent de façon accélérée.

En outre, bien que l'on ait indiqué que les informations relatives au freinage sont utilisées pour optimiser des critères tels que l'usure des éléments de friction des freins ou le temps de rotation de l'aéronef sur la plateforme aéroportuaire, on pourra utiliser ces informations pour optimiser d'autres critères, comme par exemple limiter le nombre de coups de freins pour avantager le confort des passagers ou limiter la sollicitation en fatigue des atterrisseurs et de la structure de l'aéronef.

## Revendications

1. Procédé de gestion du freinage d'un aéronef (1) lors de ses déplacements sur une plateforme aéroportuaire, comportant l'étape de, à partir de caractéristiques inertielles, par example position, vitesse, accélération, d'un mouvement de l'aéronef le long d'au moins un trajet (3, 4) donné à suivre par l'aéronef sur la plateforme aéroportuaire, déduire des informations de freinage (F1, F2...) à effectuer de sorte que l'aéronef se déplace effectivement selon ledit mouvement, le long dudit trajet.

2. Procédé selon la revendication 1, dans lequel parmi les informations de freinage déduites des caractéristiques du mouvement se trouve au moins l'une des informations suivantes:
- le nombre de freinages à effectuer;
- les durées des freinages;
- l'énergie à dissiper pour chacun des freinages;
- l'espacement entre deux freinages consécutifs.

3. Procédé selon la revendication 1, dans lequel le trajet (3,4) à suivre est choisi dans une liste de trajets prédéterminés.

4. Procédé selon la revendication 3, dans lequel les caractéristiques du mouvement pour un trajet donné sont déduites de données statistiques concernant des déplacements d'aéronefs sur la plateforme aéroportuaire.

5. Procédé selon la revendication 1, dans lequel le trajet à suivre ou le mouvement à effectuer le long de ce trajet sont modifiés en temps réel en fonction d'informations de trafic sur la plateforme aéroportuaire.

6. Procédé selon la revendication 1, dans lequel on utilise les informations de freinage pour optimiser un critère de fonctionnement de l'aéronef.

7. Procédé selon la revendication 6, dans lequel le critère de fonctionnement est une usure d'éléments de friction des freins, l'optimisation consistant à choisir un mouvement le long du trajet qui minimise l'usure prévisible compte tenu des freinages à effectuer pour suivre ledit mouvement.

8. Procédé selon la revendication 6, dans lequel ledit critère de fonctionnement est une température atteinte par des éléments de friction des freins, l'optimisation consistant à choisir un mouvement le long du trajet qui maintient ladite température au dessous d'une température maximale.

9. Procédé selon la revendication 6, dans lequel le critère de fonctionnement est une température atteinte par des éléments de friction des freins, l'optimisation consistant à déterminer une répartition de freinage entre les freins pour laquelle la température reste sous une température maximale le long du trajet

## Claims

1. A method of managing the braking of an aircraft (1) while taxiing on an airport, the method comprising, on the basis of inertial characteristics such as position, speed, acceleration, for a sequence of movements of the aircraft along at least one given path (3, 4) to be followed by the aircraft on the airport, the step of deducing information concerning the braking (F1, F2, ...) to be performed so that the aircraft does indeed travel in application of said sequence of movements along said given path.

2. A method according to claim 1, in which the braking information deduced from the characteristics of the sequence of movements comprises at least one of the following items:
the number of braking operations to be performed;
the braking durations;
the energy dissipated on each braking operation; and
the spacings between two consecutive braking operations.

3. A method according to claim 1, in which the path (3, 4) to be followed is selected from a list of predetermined paths.

4. A method according to claim 3, in which the characteristics of the sequence of movements for a given path are deduced from statistical data relating to the movements of aircraft on the airport.

5. A method according to claim 1, in which the path to be followed or the sequence of movements to be performed along said path are modified in real time as a function of information concerning airport traffic.

6. A method according to claim 1, in which the braking information is used for optimizing an operating criterion of the aircraft.

7. A method according to claim 6, in which said operating criterion is a wear of friction elements of brakes, said optimization consisting in choosing a movement along said given path that minimizes foreseeable wear given the brakings to be performed to follow said movement.

8. A method according to claim 6, in which, said operating criterion is a temperature reached friction elements of brakes, said optimization consisting in choosing a movement along said given path that maintains said temperature below a maximum temperature.

9. A method according to claim 6, in which, said operating criterion is a temperature reached by friction elements of brakes, said optimization consisting in determining a braking distribution between the brakes for which said temperature remains under a maximum temperature along said given path.

## Patentansprüche

1. Verfahren zur Steuerung der Bremsung eines Flugzeugs (1) während dessen Bewegungen auf einer Flughafen-Fläche, umfassend den Schritt, dass aus Trägheitskenngrößen, wie z. B. Position, Geschwindigkeit, Beschleunigung, einer Bewegung des Flugzeugs entlang mindestens einer gegebenen Bahn (3, 4), der das Flugzeug auf der Flughafen-Fläche folgt, Informationen über durchzuführende Bremsungen (F1, F2...) hergeleitet werden, derart, dass sich das Flugzeug tatsächlich entsprechend der genannten Bewegung entlang der genannten Bahn bewegt.

2. Verfahren nach Anspruch 1, wobei sich unter den Bremsinformationen, die aus den Kenngrößen der Bewegung hergeleitet werden, mindestens eine der folgenden Informationen befindet:
- die Anzahl der durchzuführenden Bremsungen,
- die Dauer der Bremsungen,
- die für jede der Bremsungen abzuführende Energie,
- der Abstand zwischen zwei aufeinander folgenden Bremsungen.

3. Verfahren nach Anspruch 1, wobei die zu verfolgende Bahn (3, 4) aus einer Liste mit vorgegebenen Bahnen ausgewählt wird.

4. Verfahren nach Anspruch 3, wobei die Kenngrößen der Bewegung für eine gegebene Bahn aus statistischen Daten hergeleitet werden, die Bewegungen von Flugzeugen auf der Flughafen-Fläche betreffen.

5. Verfahren nach Anspruch 1, wobei die zu verfolgende Bahn oder die entlang dieser Bahn auszuführende Bewegung in Echtzeit in Abhängigkeit von Informationen über den Verkehr auf der Flughafen-Fläche geändert werden.

6. Verfahren nach Anspruch 1, wobei man die Bremsinformationen nutzt, um ein Funktionskriterium des Flugzeugs zu optimieren.

7. Verfahren nach Anspruch 6, wobei das Funktionskriterium eine Abnutzung von Reibungselementen der Bremsen ist, wobei die Optimierung darin besteht, eine Bewegung entlang der Bahn zu wählen, die die vorhersehbare Abnutzung unter Berücksichtigung der zum Folgen der genannten Bewegung auszuführenden Bremsungen auf ein Minimum herabsetzt.

8. Verfahren nach Anspruch 6, wobei das genannte Funktionskriterium eine Temperatur ist, die von den Reibungselementen der Bremsen erreicht wird, wobei die Optimierung darin besteht, eine Bewegung entlang der Bahn auszuwählen, die die genannte Temperatur unter einer maximalen Temperatur hält.

9. Verfahren nach Anspruch 6, wobei das Funktionskriterium eine Temperatur ist, die von den Reibungselementen der Bremse erreicht wird, wobei die Optimierung darin besteht, eine Bremsverteilung unter den Bremsen festzulegen, bei der die Temperatur entlang der Bahn unter einer maximalen Temperatur bleibt.
